Europäisches Patentamt

European Patent Office

Office européen des brevets

(19)

(11) Veröffentlichungsnummer: **0 370 105**
**A1**

(12) **EUROPÄISCHE PATENTANMELDUNG**
**veröffentlicht nach Art. 158 Abs. 3**
**EPÜ**

(21) Anmeldenummer: **88904290.9**

(22) Anmeldetag: **12.02.88**

(86) Internationale Anmeldenummer:
**PCT/SU88/00034**

(87) Internationale Veröffentlichungsnummer:
**WO 89/07789 (24.08.89 89/20)**

(51) Int. Cl.5: **G05B 11/26**

(43) Veröffentlichungstag der Anmeldung:
**30.05.90 Patentblatt 90/22**

(84) Benannte Vertragsstaaten:
**BE DE FR GB IT**

(71) Anmelder: **BELORUSSKY GOSUDARSTVENNY**
**UNIVERSITET IMENI V.I.LENINA**
**Leninsky pr., 4**
**Minsk, 220080(SU)**

(72) Erfinder: **MATJUKHINA, Ljudmila, Ivanovna**
**ul. Voronyanskogo, 3-92**
**Minsk, 220039(SU)**
Erfinder: **MIKHALEV, Alexandr Sergeevich**
**ul. Voronyanskogo, 3-92**
**Minsk, 220039(SU)**
Erfinder: **ZAPLECHNIKOV, Igor Dmitrievich**
**ul. Landera, 16-48**
**Minsk, 220064(SU)**
Erfinder: **KUZMENKOV, Vitaly Viktorovich**
**ul. Zakharova, 54-17**
**Minsk, 220088(SU)**
Erfinder: **LJUBETSKY, Vitaly Dmitrievich**
**ul. D.Serdicha, 7-23**
**Minsk, 220082(SU)**

(74) Vertreter: **Patentanwälte Beetz sen. - Beetz**
**jun. Timpe - Siegfried - Schmitt-Fumian-**
**Mayr**
**Steinsdorfstrasse 10**
**D-8000 München 22(DE)**

(54) **DIGITALES FOLGESYSTEM.**

(57) Das digitale Folgesystem enthält eine Synchronmaschine (1), an deren Welle (2) ein Stellungsgeber (3) angebracht ist, dessen Ausgang (4) an eine Einheit (6) zur Ermittlung eines dem Abweichungswinkel zwischen der laufenden Stellung und der Sollstellung der Welle entsprechenden Kodes gelegt ist, an deren Ausgang eine Einheit (9) zur Erzeugung eines dem Modul des Abweichungswinkels entsprechenden Kodes, ein Umsetzer (8) des dem Modul des Abweichungswinkels entsprechenden Kodes in eine Impulsfolgefrequenz und der Steuereingang einer Reversiereinheit (21) angeschlossen sind. An den

Ausgang der Einheit (9) ist ein Multiplexer (12) und eine Einheit (10) zur Erzeugung eines der Amplitude des Ständermagnetfeldes entsprechenden Kodes gelegt, an deren Ausgänge die Eingänge (17, 16) eines Formers (18) längenmodulierter Impulsfolgen und des Multiplexers (12) angeschlossen sind, dessen Ausgang an den Eingang (19) des Formers (18) und dessen Eingänge (13, 14) an den Ausgang des Umsetzers (8) und den Ausgang (15) des Gebers (3) gelegt sind. An die Ausgänge des Formers (18) sind die Eingänge (20, 22) der Reversiereinheit (21) und einer mit dieser verbundenen Einheit (23) zur Formierung eines Stromes in den Ständerwicklungen geschaltet, wobei die Einheit (23) an die Ständerwicklungen der Synchronmaschine (1) angeschlossen ist.

FIG.1

# DIGITALES FOLGESYSTEM

## Gebiet der Technik

Die vorliegende Erfindung bezieht sich auf Steuersysteme und betrifft insbesondere ein digitales Folgesystem.

## Stand der Technik

Gegenwärtig haben Positioniereinrichtungen, zu welchen digitale Folgesysteme gehören, weitgehende Verwendung gefunden, weshalb an die digitalen Folgesysteme hohe Forderungen hinsichtlich der Sicherheit, der Positioniergenauigkeit, der Wirkungsgeschwindigkeit und der Güte der Übergangsvorgänge gestellt werden. Auch müssen die Aufgaben der elektromagnetischen Fixierung der Welle der Synchronmaschine, der Positioniereinrichtungen gelöst und die erforderliche Genauigkeit bei Änderungen der Belastungsmomente im statischen Betrieb und befriedigende dynamische Kennwerte gesichert werden.

Die bekannten digitalen Folgesysteme genügen nicht im vollen Masse allen aufgezählten Forderungen.

Bekannt ist eine digitales Folgesystem ("Diskreter Elektroantrieb mit Schrittmotoren", herausgegeben von Schilikin M.G., 1971, Energija (Moskau), S. 49), das einen Schrittmotor enthält, dessen Welle mechanisch mit einem Stellungsgeber verbunden ist, dessen Kodeausgang an einen Eingang einer Einheit zur Ermittlung eines dem Abweichungswinkel zwischen der laufenden Stellung und der Sollstellung der Welle entsprechenden Kodes gelegt ist, auf deren anderen Eingang ein der Sollstellung der Welle entsprechender Kode gegeben wird, während deren Ausgang an eine Reihenschaltung aus einem Umsetzer des dem Abweichungswinkel entsprechenden Kodes in eine Impulsfolge und aus einer Einheit zur Erzeugung eines Stromes in den Ständerwicklungen, die an die Ständerwicklungen des Schrittmotors angeschlossen ist, gelegt ist.

Bei dem bekannten digitalen Folgesystem wird die Zahl der Impulse in der von dem Umsetzer des dem Abweichungswinkel entsprechenden Kodes erzeugten Folge durch den Dreh-

winkel des Schrittmotors, die Folgefrequenz der Steuerimpulse aber durch die Drehzahl der Welle bestimmt. Hierbei gestattet die vorhandene Wellenstellungsrückführung, die über den Stellungsgeber und die Einheit zur Erzeugung eines dem Abweichungswinkel zwischen der laufenden Stellung und der Sollstellung der Welle entsprechenden Kodes realisiert wird, Positionierfehler, die mit der begrenzten Anlaufdrehzahl des Schrittmotors verbunden sind, und folglich die Schrittausfallmöglichkeit bei einer grossen Folgefrequenz der Steuerimpulse auszuschliessen.

Die Orientierung des Ständermagnetfeldes wird durch eine Schaltung der Ständerwicklungen des Schrittmotors an die Speisequelle, die über die Einheit zur Erzeugung eines Stromes in den Ständerwicklungen realisiert wird, bestimmt. Hierbei findet in jedem Kommutierungstakt der Ständerwicklungen eine diskrete Änderung der Lage des Ständermagnetfeldes statt, während die entstehenden Pulsationen des von dem Schrittmotor entwickelten Momentes sich negativ auf die dynamischen Kennwerte des digitalen Folgesystems auswirken. Die Realisierung der Steuerung des Schrittmotors, bei der seine Ständerwicklungen an die Speisequelle während des gesamten Kommutierungstaktes angeschlossen sind, gestattet es, eine elektromagnetische Fixierung der Welle des Schrittmotors im Positionierungspunkt durch das von dem Schrittmotor entwickelten Synchronisiermomentes ohne zusätzliche Fixierungseinrichtungen zu realisieren. Jedoch ist bei einem Belastungsmoment an der Welle des Schrittmotors das bekannte digitale Folgesystem nicht imstande, den Positionierfehler, der durch die Abhängigkeit des Synchronisiermomentes von der gegenseitigen Lage der Magnetfelder des Läufers und des Ständers des Schrittmotors bestimmt wird, zu beseitigen.

Die Wirkungsgeschwindigkeit des bekannten digitalen Folgesystems bei grossen Werten des dem Abweichungswinkel zwischen der laufenden Stellung und der Sollstellung der Welle entsprechenden Kodes ist nicht gross, da die Wellenstellungsrückführung die Aufrechterhaltung einer maximalen Zusammenwirkung zwischen den Magnetfeldern des Läufers und des Ständers des Schrittmotors nicht sichert und die Ausregelung der durch verschiedene Winkel gekennzeichneten Abweichungen findet mit einer konstanten Geschwindigkeit statt.

Darüber hinaus hängt die Positioniergenauigkeit des bekannten digitalen Folgesystems nicht von dem maximalen Auflösungsvermögen des Stellungsgebers ab, da es keine Positioniermöglichkeit der Schrittmotorwelle im Bereich des Wellendrehwinkels, der einem Steuerimpuls zugeordnet ist, und durch die Zahl der Ständerwicklungen und die Art deren Kommutierung sowie durch die Zahl der Polpaare des Schrittmotorläufers bestimmt wird, gibt.

Bekannt ist auch ein digitales Folgesystem (Elektronische Technik in der Automatik, Artikelsammlung, Heft 16, 1985, Radio i Svjas (Moskau) L.I.Matjukhina, A.S.Michalev u.a. "Stellbaustein eines Industrieroboters auf der Grundlage eines kontaktlosen Gleichstrommotors, S.211-215) bekannt, das eine Mehrphasen-Synchronmaschine enthält, an deren Welle ein Stellungsgeber angebracht ist, der kodeausgangsseitig an den einen Eingang einer Einheit zur Ermittlung des dem Abweichungswinkel zwischen der laufenden Stellung und der Sollstellung der Welle entsprechenden Kodes gelegt ist, bei der an den anderen Eingang ein der Sollstellung der Welle entsprechender Kode gegeben wird und an deren Ausgang eine Einheit zur Erzeugung eines dem Modul des Abweichungswinkels entsprechenden Kodes gelegt ist,die elektrisch mit einem Former breitenmodulierter Impulsfolgen verbunden ist, der elektrisch mit dem Impulsausgang des Stellungsgebers verbunden und über seinen einen Ausgang an den einen Eingang einer Reversiereinheit angeschlossen ist, deren Steuereingang an den Ausgang der Einheit zur Ermittlung des dem Abweichungswinkel zwischen der laufenden Stellung und der Sollstellung der Welle entsprechenden Kodes geführt ist, die über den anderen Ausgang an den einen Eingang einer Einheit zur Formierung des Stromes in den Ständerwicklungen der Mehrphasen-Synchronmaschine angeschlossen ist, deren anderer Eingang an den Ausgang der Reversiereinheit und deren Ausgang an die Ständerwicklungen der Mehrphasen-Synchronmaschine angeschlossen sind.

Bei dem bekannten digitalen Folgesystem ist der Former breitenmodulierter Impulsfolgen direkt an den Impulsausgang des Stellungsgebers geschaltet, was eine Änderung der Orientierung des Ständermagnetfeldes sichert, wobei die Amplitude des Ständermagnetfeldes proportional dem Signal ist, das vom Ausgang der Einheit zur Ermittlung des dem Abweichungswinkel zwischen der laufenden Stellung und der Sollstellung der Welle entsprechenden Kodes eintrifft.

Das bekannte digitale Folgesystem weist eine verhältnismässig hohe Wirkungsgeschwindigkeit durch den direkten Anschluss des Stellungsgebers an den Former breitenmodulierter Impulsfolgen auf, was die Aufrechterhaltung einer maximalen Zusammenwirkung zwischen den Magnetfeldern des Läufer und des Ständers der Synchronmaschine gewährleistet und die dynamischen Kennwerte des bekannten digitalen Folgesystems verbessert. Die Abhängigkeit der Amplitude des Ständermagnetfeldes von dem Modul des dem Abweichungswinkels zwischen der laufenden Stellung und der Sollstellung der Welle sichert eine Verminderung der Drehzahl der Welle der Synchronmaschine beim Herankommen an den Positionierpunkt, wobei bei einem Nullwert des Fehlersignals am Eingang des digitalen Folgesystems kein Magnetfeld in den Ständerwicklungen aufgebaut wird, aber dies gestattet es nicht, eine elektromagnetische Fixierung der Welle in dem Positionierpunkt zu realisieren. Darüber hinaus sichert ein solches digitales Folgesystem eine Bremsung der Synchronmaschine nur bei Änderung des Vorzeichens des dem Abweichungswinkel zwischen der laufenden Stellung und der Sollstellung der Welle entsprechenden Kodes, was unvermeidlich zum Auftreten einer Überregelung und abklingender Eigenschwingungen in den Übergangsvorgängen führt. Daneben tritt im bekannten digitalen Folgesystem beim Vorliegen von Belastungsmomenten an der Welle der Synchronmaschine ein Fehler im statiñären Betrieb auf, das von dem Wert des Belastungsmomentes abhängt.

Offenbarung der Erfindung

Der Erfindung liegt die Aufgabe zugrunde, ein digitales Folgesystem mit einer solchen Orientierung des Magnetfeldes des Ständers zu schaffen, bei dem zu Beginn der Ausregelung des Solldrehwinkels der Welle der Synchronmaschine die Orientierung des Ständermagnetfeldes durch die Orientierung des Läufermagnetfeldes und ab dem Zeitpunkt der Gleichheit zwischen der laufenden Abweichungsgrösse und der Sollabweichungsgrösse durch die laufende Abweichungsgrösse bestimmt wird.

Die gestellte Aufgabe wird dadurch gelöst, dass das digitale Folgesystem, das eine Mehrphasen-Synchronmaschine enthält, an deren Welle ein Stellungsgeber angebracht ist, der kodeausgangsseitig an den einen Eingang einer Einheit zur Ermittlung eines dem Abweichungswinkels zwischen der laufenden Stellung und der Sollstellung der Welle entsprechenden Kodes gelegt ist, bei der an den anderen Eingang ein der Sollstellung der Welle entsprechender Kode angelegt wird, und an deren Ausgang eine Einheit zur Erzeugung eines dem Modul des Abweichungswinkels entsprechenden Kodes geschaltet ist, die elektrisch mit einem Former längenmodulierter Impulsfolgen verbunden ist, der mit dem Impulsausgang des Stellungsgebers in elektrischer Verbindung steht und über seinen einen Ausgang an den einen Eingang einer Reversiereinheit, deren Steuereingang an den Ausgang der Einheit zur Ermittlung des dem Abweichungswinkel zwischen der laufenden Stellung und der Sollstellung der Welle entsprechenden Kodes gelegt ist, und über seinen anderen Ausgang an den einen Eingang einer Einheit zur Formierung des Stromes in den Ständerwicklungen der Mehrphasen-Synchronmaschine angeschlossen ist, deren anderer Eingang an den Ausgang der Reversiereinheit und deren Ausgang an die Ständerwicklungen der Mehrphasen-Synchronmaschine angeschlossen sind, gemäss der Erfindung einen Umsetzer des dem Abweichungswinkel entsprechender Kodes in eine Impulsfolgefrequenz, dessen Eingang an den Ausgang der Einheit zur Ermittlung des dem Abweichungswinkel zwischen der laufenden Stellung und der Sollstellung der Welle entsprechenden Kodes geführt ist, einen Multiplexer, der über die Dateneingänge an den Ausgang des Umsetzers des dem Abweichungswinkel entsprechenden Kodes in eine Impulsfolgefrequenz und an den Impulsausgang des Stellungsgebers und über den einen Steuereinhang an den Ausgang der Einheit zur Erzeugung eines dem Modul des Abweichungswinkels entsprechenden Kodes geschaltet ist, wobei der Multiplexer ausgangsseitig an den Impulseingang des Formers längenmodulierter Impulsfolgen angeschlossen ist, und eine Einheit zur Erzeugung eines der Amplitude des Ständermagnetfeldes entsprechenden Kodes, die eingangsseitig an den Ausgang der Einheit zur Erzeugung eines dem Modul des Abweichungswinkels entsprechenden Kodes und ausgangsseitig an den anderen Steuereingang des Multiplexers und den Impulseingang des Formers längenmodulierter Impulsfolgen angeschlossen ist, enthält.

Es ist zweckmässig, dass bei dem digitalen Folgesystem der Umsetzer des dem Abweichungswinkels entsprechenden Kodes in eine Impulzfolgefrequenz einen Festwertspeicher, einen eingangsseitig an die Ausgänge des Festwertspeichers geschalteten steuerbaren Frequenzteiler und einen Umschalter, dessen einer Eingang an den Ausgang des steuerbaren Frequenzteilers angeschlossen und dessen anderer Eingang mit dem Eingang des Festwertspeichers zusammengeschaltet ist, enthält.

Es ist ratsam, dass bei dem digitalen Folgesystem der Multiplexer ein Schwellenwertelement, zwei Multiplikationseinheiten, bei einer von denen der eine Eingang an den Ausgang eines Schwellenwertelementes angeschlossen ist, und einen Addierer,dessen Eingänge an die Ausgänge der Multiplikationseinheiten geschaltet sind, enthält.

Es ist zweckmässig, dass bei dem digitalen Folgesystem die Einheit zur Erzeugung eines der Amplitude des Ständermagnetfeldes entsprechenden Kodes ein Schwellenwertelement und einen Summator, dessen einer Eingang mit dem Eingang des Schwellenwertelementes zusammengeschaltet ist, und dessen anderer Eingang am Ausgang des letzteren liegt, enthält.

Auch ist es zweckmässig, dass bei dem digitalen Folgesystem die Einheit zur Erzeugung eines der Amplitude des Ständermagnetfeldes entsprechenden Kodes auf der Grundlage eines Schwellenwertelementes ausgeführt ist und dass der Former breitenmodulierter Impulsfolgen in Reihe geschaltet - einen Former für die Adresse der Lage des Ständermagnetfeldes, einen Umsetzer für die Adresse der Lage des Ständermagnetfeldes und einen Festwertspeicher, eine der Phasenzahl der Mehrphasen-Synchronmaschine entsprechende Zahl von Pulslängenmodulatoren, deren Dateneingänge an die Kodeausgänge des Festwertspeichers angeschlossen sind, einen an die einen Steuereingänge der Pulslängenmodulatoren gelegten Impulsgenerator und einen eingangsseitig an den Impulsgenerator und ausgangsseitig an die anderen Eingänge der Pulslängenmodulatoren angeschlossenen Frequenzteiler enthält, wobei der Stellungsgeber mit einem an den Dateneingang des Umsetzers für die Adresse der Lage des Ständermagnetfeldes gelegten Datenausgang versehen ist.

Das erfindungsgemässe digitale Folgesystem sichert bei vorgegebenem Betriebsartenänderungsgesetz die Ausregelung der Führungsgrössen mit einer hohen Wirkungsgeschwindigkeit unter Ausbleiben von Überregelungen durch rechtzeitige Änderung der Orientierung der Läufer- und Ständermagnetfelder sowie die geforderte Positioniergeschwindigkeit und die elektromagnetische Fixierung der Welle der Synchronmaschine im gesamten Änderungsbereich des Belastungsmomentes. Dies erweitert das Anwendungsgebiet des digitalen Folgesystems, erhöht die Arbeitsgüte der Positioniereinrichtungen und ermöglicht die Vereinfachung solcher Einrichtungen durch Wegfall der Vorrichtungen zur Fixierung der Welle der Synchronmaschine im Positionierpunkt. Darüber hinaus erhöht die Verarbeitung der Information in Digitalform die Sicherheit der Positioniereinrichtungen und erleichtert deren Kopplung mit Mikroprozessorsystemen.

Kurzbeschreibung der Zeichnungen

Nachstehend soll die Erfindung durch die Beschreibung konkreter Ausführungsbeispiele unter Bezugnahme auf die beiliegende Zeichnungen erläutert werden. Es zeigen:

Fig. 1 ein Funktionsblockschema eines erfindungsgemässen digitalen Folgesystems;

Fig. 2 dito wie in Fig. 1 mit elektrischen Schaltbildern einer Einheit zur Ermittlung eines dem Abweichungswinkel zwischen der laufenden Stellung und der Sollstellung der Welle entsprechenden Kodes, eines Umsetzers des dem Abweichungswinkel entsprechenden Kodes in eine Impulsfolgefrequenz, einer Einheit zur Erzeugung eines dem Ständermagnetfeld entsprechenden Kodes, eines Multiplexers, eines Formers längenmodulierter Impulsfolgen, eines Stellungsgebers, einer Reversiereinheit und einer Einheit zur Formierung eines Stromes in den Ständerwicklungen einer Mehrphasen-Synchronmaschine;

Fig. 3 dito wie in Fig. 2, mit anderen Ausführungsformen der elektrischen Schaltbilder der Einheit zur Erzeugung eines der Amplitude des Ständermagnetfeldes entsprechenden Kodes und des Formers längenmodulierter Impulsfolgen;

Fig. 4 Kurven der Übergangsvorgänge für die Ausführungsformen des digitalen Folgesystems nach Fig. 2 und 3;

Fig. 5 Vektorbilder der Läufer- und Ständermagnetfelder der Synchronmaschine für die Ausführungsform des digitalen Folgesystems nach Fig. 2;

Fig. 6 dito wie in Fig. 5 für die Ausführungsform des Folgesystems nach Fig. 3.

Bevorzugte Ausführungsform der Erfindung

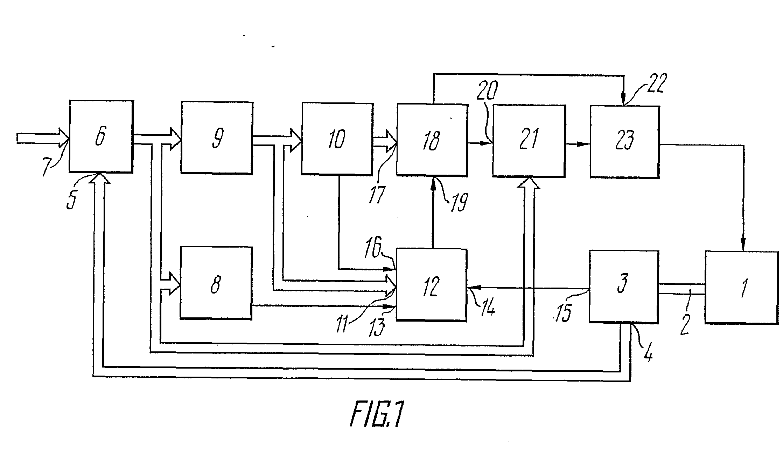

Das digitale Folgesystem enthält eine Mehrphasen-Synchronmaschine 1 (Fig. 1), an deren Welle ein Stellungsgeber 3 angeordnet ist, an dessen Kodeausgang 4 der Eingang 5 einer Einheit zur Ermittlung eines dem Abweichungswinkel zwischen der laufenden Stellung und der Sollstellung der Welle entsprechenden Kodes liegt. Das Signal von dem Kodeausgang 4 des Stellungsgebers 3 ist als n-stelliger Kode $L_D$ dargestellt, dessen obere Grenze durch das Auflösungsvermögen des Stellungsgebers 3 und dessen untere Grenze durch die Forderungen, die an die Genauigkeit des digitalen Folgesystems gestellt werden, bestimmt wird. Auf den Eingang 7 einer Einheit 6 zur Ermittlung eines dem Abweichungswinkel zwischen der laufenden Stellung und der Sollstellung der Welle entsprechenden Kodes wird ein n-stelliger, der Sollstellung der Welle 2 der Synchronmaschine 1 entsprechender Kode $L_Z$ gegeben. An den 2(n+1)-stelligen Kodeausgang der Einheit 6 zur Ermittlung des dem Abweichungswinkel zwischen der laufenden Stellung und der Sollstellung der Welle entsprechenden Kodes die Eingänge eines Umsetzers 8 des der Abweichungswinkel entsprechenden Kodes in eine Impulsfolgefrequenz und einer Einheit 9 zur Erzeugung eines dem Modul des Abweichungswinkels entsprechenden Kodes, die nach einem bekannten Schema, zum Beispiel auf der Grundlage eines mehrstelligen Selektors - eines Multiplexers-ausgeführt ist, gelegt. An den n-stelligen Kodeausgang der Einheit 9 zur Erzeugung eines dem Modul des Abweichungswinkel entsprechenden Kodes sind der Eingang einer Einheit 10 zur Erzeugung eines der Amplitude des Ständermagnetfeldes entsprechenden Kodes und der Steuereingang 11 des Multiplexers 12 angeschlossen. An die Dateneingänge 13, 14 des Multiplexers 12 sind der Ausgang des Umsetzers 8 des dem Abweichungswinkel entsprechenden Kodes in eine Impulsfolgefrequenz und der Impulsausgang 15 des Stellungsgebers 3 gelegt, während an dessen Steuereingang 16 der eine Ausgang der Einheit 10 zur Erzeugung des der Amplitude des Ständermagnetfeldes entsprechenden Kodes angeschlossen ist. Am n-stelligen Kodeausgang der Einheit 10 liegt der Dateneingang 17 eines Formers 18 längenmodulierter Impulse, an dessen Ausgang der Multiplexer 12 angeschlossen ist. An den einen Ausgang des Formers 18 ist der Eingang 20 einer Reversiereinheit 21 gelegt, deren Steuereingang an den 2(n+1)-stelligen Kodeausgang der Einheit 6 zur Ermittlung des dem Abweichungswinkel zwischen der laufenden Stellung und der Sollstellung der Welle entsprechenden Kodes angeschlossen ist. An den anderen Ausgang des Formers 18 ist der eine Eingang 22 einer Einheit 23 zur Formierung eines Stromes in den Ständerwicklungen der Mehrphasen-Synchronmaschine geführt, deren anderer Eingang an den Ausgang der Reversiereinheit 21 und deren Ausgang an die Ständerwicklungen der Mehrphasensynchronmaschine 1 gelegt sind.

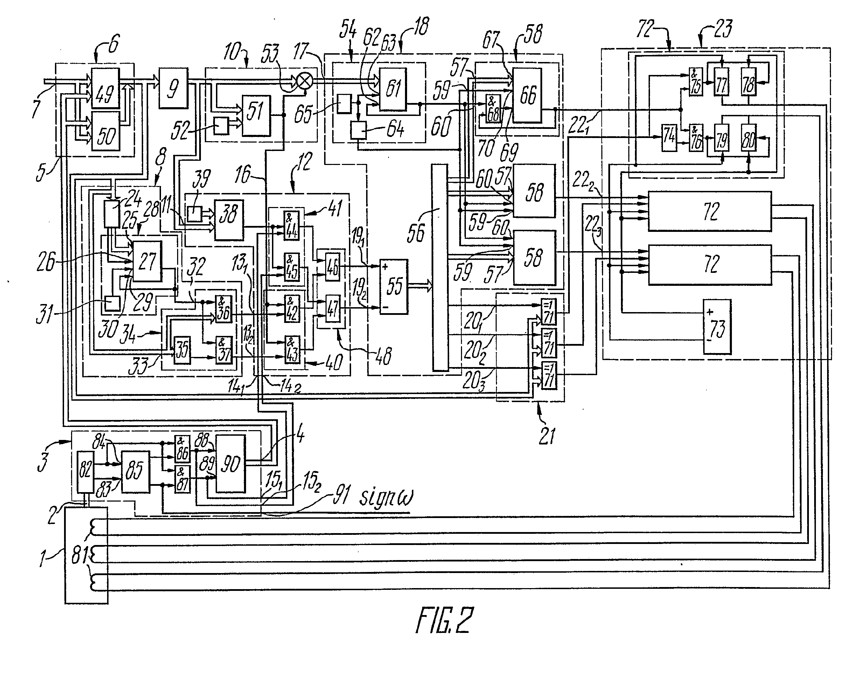

Der Umsetzer 8 des Abweichungskodes in eine Impulsfolgefrequenz enthält bei der in Betracht kommenden Ausführungsform einen Festwertspeicher 24 (Fig. 2) mit in diesem abgelegten Kodes, die die Impulsfolgefrequenz bestimmen, dessen Adresseingang im allgemeinen Falle als 2(n+1)-stelliger Kodeeingang des Umsetzers des der Winkelabweichung entsprechenden Kodes in eine Impulsfolgefrequenz dient, dessen einer Ausgang an den Dateneingang 25 und dessen anderer Ausgang an den Rücksetzeingang 26 des Zählers 27 eines steuerbaren Frequenzteilers 28 angeschlossen sind. Hierbei wird die Stellenzahl des Ausganges des Festwertspeichers 24, der an den Dateneingang 25 des Zählers 27 angeschlossen ist, durch die Stellenzahl des Zählers 27 selbst bestimmt. Der Borgausgang des Zählers 27 steht mit dem Schreibeingang 29 in Verbindung und der Subtraktionseingang 30 desselben Zählers ist an einen Impulsgenerator 31 mit einer Impulsfrequenz $f_1$ angeschlossen. An den Ausgang des steuerbaren Frequenzteilers 28, welcher durch den Ausgang des Zählers 27 gebildet wird, und an den Eingang der entsprechenden Bitstelle des Festwertspeichers 24 (zur bequemen Darstellung ist diese Verbindung durch eine Doppellinie gezeigt) ist über seine Eingänge 32, 33 ein Schalter 34 gelegt, der einen Negator 35, dessen Eingang als Eingang 33 des Schalters 34 dient, und zwei logische UND-Glieder 36, 37 mit zwei Eingängen, deren eine Eingänge jeweils mit dem Eingang und dem Ausgang des Negators 35 verbunden sind und deren andere Eingänge zusammengeschaltet sind und als Eingang 32 des Schalters 34 dienen, enthält. Die Ausgänge der logischen UND-Glieder 36, 37 dienen als Ausgänge des Umsetzers 8 zur Umsetzung des Abweichungskodes in eine Impulsfolgefrequenz.

Der Multiflexer 12 des digitalen Folgesystems enthält bei der zu betrachtenden Ausführungsform ein Schwellenwertelement 38, das zum Vergleich des durch einen Sollwertgeber 39 an einem Dateneingang des Schwellenwertelementes 38 vorgestimmten Kodes mit einem Kode dient, der an dem anderen Dateneingang eintrifft, der als Steuereingang 11 des Multiplexers 12 benutzt wird. Die Multiplikationseinheiten 40, 41 des Multiplexers 12 enthalten je zwei logische 2-Eingangs- UND-Glieder 42, 43, 44, 45, wobei die einen Eingänge der logischen 2-Eingangs-UND-Glieder 42, 43 der Multiplikationseinheit 40 zusammengeschaltet sind und als Steuereingang 16 des Multiplexers 12 dienen und die anderen Eingänge als Dateneingänge $13_1$, $13_2$ des Multiplexers 12 benutzt werden. Die einen Eingänge der logischen 2-Eingangs-UND-Glieder 44, 45 der Multiplikationseinheit 41 sind zusammengeschaltet und an den Ausgang des Schwellenwertelementes 38 angeschlossen und die anderen Eingänge dienen als Dateneingänge $14_1$, $14_2$ des Multiplexers 12. An die Ausgänge der logischen 2-Eingangs-UND-Glieder 42, 44, 43, 45 sind jeweils die Eingänge der logischen 2-Eingangs-ODER-Glieder 46, 47 des Addierers 48 angeschlossen.

Die Einheit 6 zur Ermittlung des dem Abweichungswinkel zwischen der laufenden Stellung und der Sollstellung der Welle entsprechenden Kodes ist bei dieser Ausführungsform auf der Grundlage von zwei Arithmetik-Logik-Einheiten 49, 50 ausgeführt, die n-stellige Kodeeingänge haben. Hierbei sind der Minuend- und der Subtrahend-Kodeeingang der Arithmetik-Logik-Einheit 49 mit den entgegengesetzten Kodeeingängen der anderen Arithmetik-Logik-Einheit 50 zusammengeschaltet. Hierbei dienen die zusammengeschalteten Kodeeingänge der Arithmetik-Logik-Einheiten 49, 50 jeweils als Eingänge 7, 5 der Einheit 6 zur Ermittlung des dem Abweichungswinkel zwischen der laufenden Stellung und der Sollstellung der Welle entsprechenden Kodes dienen. Die Arithmetik-Logik-Einheiten 49, 50 haben (n+1)-stellige Kodeeingänge, die einen gemeinsamen 2(n+1)-stelligen Kodeausgang der der Einheit 6 zur Ermittlung des dem Abweichungswinkel zwischen der laufenden Stellung und der Sollstellung der Welle entsprechenden Kodes bilden, wobei der Eingang des Umsetzers 8 des dem Abweichungswinkel entsprechenden Kodes in eine Impulsfolgefrequenz zumindest mit einem der (n+1)-stelligen Kodeausgänge der Arithmetik-Logik-Einheit 49, 50 verbunden ist (in der Zeichnung ist die Verbindung mit dem 2(n+1)-stelligen Kodeausgang der Einheit 6 schematisch gezeigt).

Bei der beschriebenen Ausführung des digitalen Folgesystems enthält die Einheit 10 zur Erzeugung eines der Amplitude des Ständermagnetfeldes entsprechenden Kodes ein Schwellenwertelement 51, das zum Vergleich des n-stelligen Kodes, der von dem Sollwertgeber 52 an einem Dateneingang des Schwellenwertelementes 51 vorgegeben wird, mit einem n-stelligen Kode, der an dem anderen Dateneingang desselben eintrifft. An den Eingang des Schwellenwertelementes 51 ist ein Eingang des Summators 53 angeschlossen, dessen anderer Eingang mit dem Eingang des Schwellenwertelementes 51 zusammengeschaltet ist und als Eingang der Einheit 10 zur Erzeugung eines der Amplitude des Ständermagnetfeldes entsprechenden Kodes dient, deren einer Ausgang durch den Ausgang des Schwellenwertelementes 51 und deren anderer durch den Ausgang des Summators 53 gebildet wird.

Der Former 18 längenmodulierter Impulsfolgen enthält bei dieser Ausführungsform einen steuerbaren Frequenzteiler 54 und - in Reihe geschaltet - einen Former 55 der Adresse der Lage des Ständermagnetfeldes, der beispielsweise auf der Grundlage eines Reversierzählers ausgeführt ist, und einen Festwertspeicher 56 mit in diesem abgelegten Kodes für Impulsdauern und -polung, an dessen Kodeausgängen die Dateneingänge 57 dreier identischer längenmodulierter Modulatoren 58 (nach der Phasenzahl der Synchronmaschine 1 ) gelegt sind, an deren Eingängen 59, 60 die Ausgänge des steuerbaren Frequenzteilers 54 angeschlossen sind. Der steuerbare Frequenzteiler 54 enthält bei der betrachtenden Ausführungsform einen n-stelligen Zähler 61, dessen Dateneingang als Dateneingang 17 des Formers 18 längenmodulierter Signale dient und dessen Borgeingang mit dem Schreibeingang 62 verbunden ist. An den Subtraktioneseingang 63 des Zählers 61 sind der Eingang des Frequenzteilers 64 und der mit diesen zusammengeschaltete Ausgang eines Impulsgenerators 65 mit einer Frequenz $f_2$ angeschlossen. Der Borgausgang des Zählers 61 und des Frequenzteilers 64 dienen als Ausgänge des steuerbaren Frequenzteilers 54.

Jeder der Pulslängenmodulatoren 58 enthält einen Zähler, dessen Dateneingang 67 als Dateneingang 57 des Pulslängenmodulators 58 dient und ein logisches UND-Glied 68 mit zwei Eingängen, dessen Ausgang an den Subtraktionseingang 69 des Zählers 66 angeschlossen ist. Der eine Eingang des logischen 2-Eingangs-UND-Gliedes 68 ist an den Borgausgang des Zählers 66 angeschlossen, und der andere Eingang des UND-Gliedes 68 und der Schreibeingang 70 des Zählers 66 dienen als Steuereingang 60 bzw. 59 des Pulslängenmodulators 58, dessen Ausgang als Borgausgang des Zählers 66 benutzt wird.

Die Reversiereinheit 21 ist bei der zu betrachtenden Ausführungsform auf der Grundlage von drei (nach der Phasenzahl der Synchronmaschine) logischen 2-Eingangs-Exklussiv-ODER-Gliedern 71 ausgeführt, bei denen die einen Eingänge an die Vorzeichenausgänge des Festwertspeichers 56 gelegt sind und als Eingänge $20_1$, $20_2$, $20_3$ der Reversiereinheit 21 dienen und die anderen Eingänge zusammengeschaltet sind und als Steuereingang derselben dienen. Bei einer solchen Ausführung der Revesiereinheit 21 ist deren Steuereingang an die entsprechende Bitstelle des $2(n+1)$-stelligen Kodeausganges der Einheit 6 zur Ermittlung des dem Abweichungswinkel entsprechenden Kodes angeschlossen, wobei zur bequemeren Darstellung diese Verbindung schematisch durch eine "Kodelinie" (Doppellinie) gezeigt ist.

Die Einheit 23 zur Erzeugung eines Stromes in den Ständerwicklungen der Mehrphasensynchronmaschine enthält drei (nach der Phasenzahl der Synchronmaschine 1) an eine Speisequelle 73 angeschlossene identische Schalter 72.

Jeder Schalter 72 enthält einen Negator 74, dessen Eingang an den entsprechenden Ausgang der Reversiereinheit 21 angeschlossen ist, zwei logische UND-Glieder 75, 76 mit je zwei Eingängen, deren eine Eingänge als Eingang bzw. Ausgang des Negators 74 dienen und deren andere zusammengeschaltet und an den Ausgang des Pulslängenmodulators 58 der entsprechenden Phase der Synchronmaschine 1 gelegt sind und jeweils als Eingänge $22_1$, $22_2$, $22_3$ der Einheit 23 benutzt werden. An die Ausgänge der logischen 2-Eingangs-UND-Glieder 75, 76 sind jeweils die Steuereingänge der elektronischen Schalter 77, 78, 79, 80, die beispielsweise mit paarweise komplimentären Transistoren ausgeführt sind, angeschlossen. Die Leistungseingänge der Schalter 77, 79 und 78, 80 sind paarweise zusammengeschaltet und an die Pole von entgegengesetzter Polarität der Speisequelle 73 angeschlossen. Hierbei sind die Ausgänge der Schalter 77, 78 und 79, 80 paarweise zusammengeschaltet und an die Anschlüsse der entsprechenden Ständerwicklung der Synchronmaschine 1 gelegt.

Bei der betrachteten Ausführungsform enthält der Stellungsgeber 3 einen Umsetzer 82 der Winkelverstellungen, der direkt an der Welle 2 der Synchronmaschine 1 befestigt ist, an dessen Impulsausgänge der Takt- und Dateneingang 83 bzw. 84 eines Flipflops 85 gelegt sind, an dessen nichtinvertierenden und invertierenden Ausgang die einen Eingänge logischer 2-Eingangs-UND-Glieder 86, 87 angeschlossen sind, deren andere Eingänge mit dem Dateneingang 84 des Flipflops 85 zusammengeschaltet sind. An die Eingänge der logischen 2-Eingangs-UND-Glieder 86, 87, welche bei der betrachteten Ausführungsform als Impulsausgänge $15_1$, $15_2$ des Stellungsgebers 3 dienen, sind der nichtinvertierende und invertierende Eingang 88 bzw. 89 eines Zählers 90 gelegt, dessen n-stelliger Ausgang als Kodeausgang 4 des Stellungsgebers 3 fungiert. Das von einem der Ausgänge des Flipflops 85 eintreffende Signal trägt eine Imformation über die Drehrichtung sign $\omega$ der Synchronmaschine 1; hierbei dient der Ausgang des Flipflops 85 als Datenausgang 91 des Stellungsgebers 3.

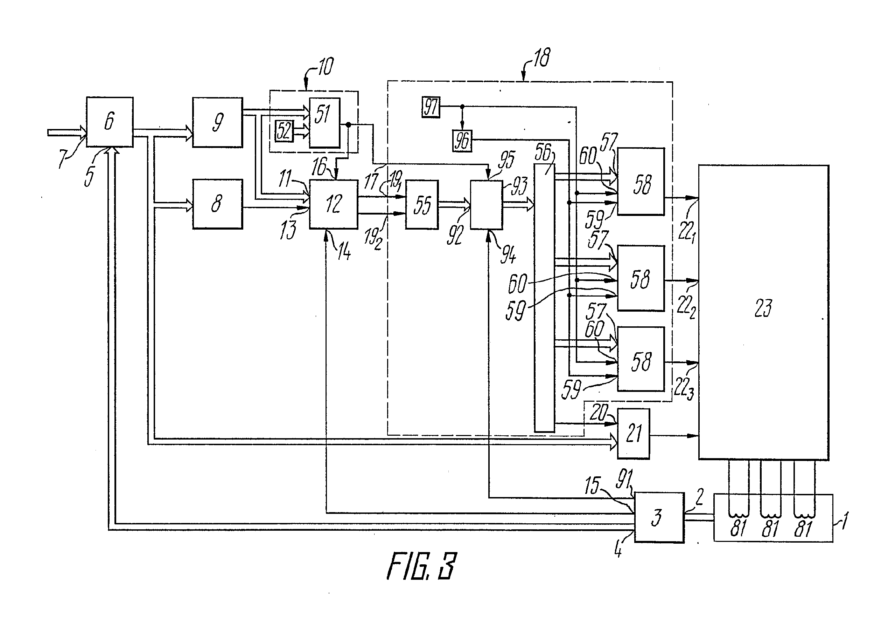

Bei einer anderen Ausführungsform des digitalen Folgesystems gemäss Fig. 3 sind der Stellungsgeber 3, die Einheit 6 zur Ermittlung des dem Abweichungswinkel zwischen der laufenden Stellung und der Sollstellung der Welle entsprechenden Kodes, die Einheit 9 zur Erzeugung eines dem Modul des Abweichungswinkels entsprechenden Kodes, der Umsetzer 8 des dem Abweichungswinkel entsprechenden Kodes in eine Impulsfolgefrequenz, der Multiplexer 12, die Reversiereinheit 21 und die Einheit 23 zur Formierung eines Stromes in den Ständerwicklung der Synchronmaschine analog den entsprechenden Einheiten gemäss Fig. 2 ausgeführt.

Bei dieser Ausführungsform ist die Einheit 10 zur Erzeugung eines der Amplitude des Ständermagnetfeldes entsprechenden Kodes auf der Grundlage eines in Fig. 1 dargestellten Schwellenwertelementes 51 ausgeführt, wobei der Ausgang des Schwellenwertelementes 51 direkt als Ausgang der Einheit 10 zur Erzeugung eines der Amplitude des Ständermagnetfeldes entsprechenden Kodes dient. Als Kodeausgang der Einheit 10 wird auch der Ausgang des Schwellenwertelementes 51 benutzt. In diesem Zusammenhang ist ist die Verbindung mit dem Eingang 17 des Formers 18 durch eine Linie angedeutet.

Bei dem Former 18 längenmodulierter Impulsfolgen ist der Former 55 der Adresse der Lage des Ständermagnetfeldes, der Fetswertspeicher 56 und die Pulslängenmodulatoren 58 analog wie die entsprechenden in Fig. 2 dargestellten Einheiten ausgeführt. An den Ausgang des Formers 55 der Adresse der Lage des Ständermagnetfeldes ist über den Kodeeingang 92 ein Wandler 93 der Adresse der Lage des Ständermagnetfeldes gelegt, dessen Dateneingang 94 an den Datenausgang 91 des Stellungsgebers 3 angeschlossen ist. An den Eingang des Festwertspeichers 56 ist der Ausgang eines Wandlers 93 der Adresse der Lage des Ständermagnetfeldes gelegt, dessen Steuereingang 95 an den Ausgang der Einheit 10 zur Erzeugung eines der Amplitude des Ständermagnetfeldes entsprechenden Kodes angeschlossen ist und als Dateneingang 17 des Formers 18 längenmodulierter Impulsfolgen fungiert. An den Eingang eines Frequenzteilers 96 ist ein Impulsgenerator 97 mit einer Frequenz $f_3$ angeschlossen, der mit dem Steuereingang 60 des Pulslängenmodulators 58 in Verbindung steht, während der Ausgang des Frequenzteilers 96 als Steuereingang 59 des Pulslängenmodulators 58 dient.

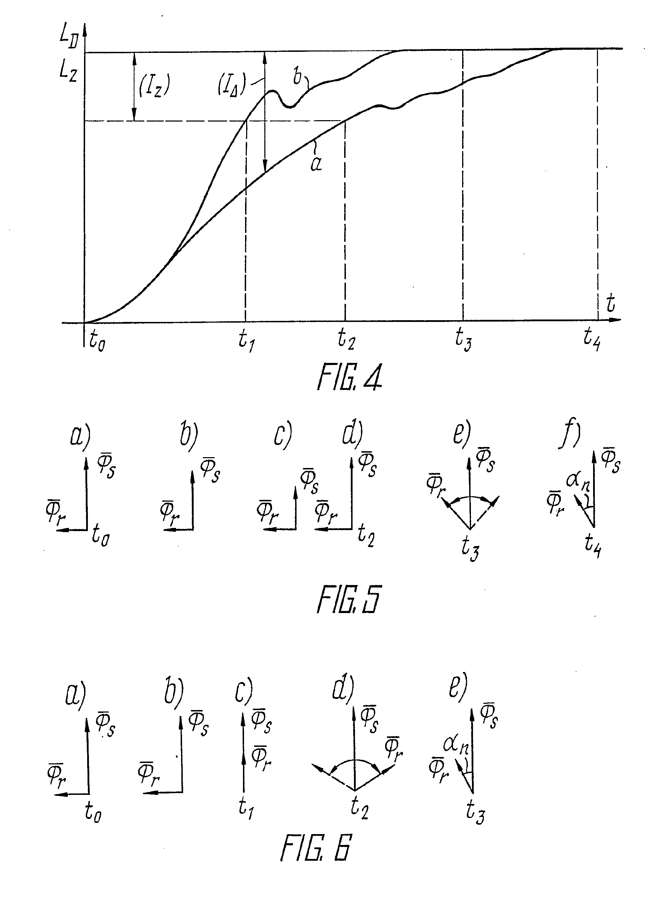

Zum besseren Verständnis der Wirkungsweise digitalen Folgesystems sind in Fig. 4 (a, b) Diagramme der Übergangsvorgänge bei einer sprungartigen Änderung des vorgegebenen Kodes $L_z$ der Wellenstellung dargestellt, wonach der Abszissenachse die Zeit t und nach der Ordinatenachse der laufende Wert des Kodes $L_D$ für den Drehwinkel der Welle der Synchronmaschine jeweils für die in Fig. 2, 3 dargestellten Ausführungsformen des digitalen Folgesystems aufgetragen sind. In Fig. 5 (a, b, c, d, e, f) und Fig. 6 (a, b, c, d, e) sind die Vektordiagramme der Magnetfelder $\overset{\to}{\Phi}_r$, $\overset{\to}{\Phi}_s$ des Läufers und des Ständers der Synchronmaschine in verschiedenen Betriebsarten des digitalen Folgesystems für dessen Ausführungsformen gemäss Fig. 2, 3 dargestellt.

Das digitale Folgesystem funktioniert folgenderwiese, Der Stellungsgeber 3 (Fig. 1) erzeugt am Kodeausgang 4 einen n-stelligen Kode $L_D$ der laufenden Stellung der Welle 2, der am Eingang 5 der Einheit 6 zur Ermittlung eines dem Abweichungswinkel zwischen der laufenden Stellung und der Sollstellung der Welle entsprechenden Kodes eintrifft, auf deren Eingang 7 ein n-stelliger Kode $L_z$ der Sollstellung der Welle der Synchronmaschine 1 gegeben wird. Bei verschiedenen Werten der Kode $L_z$ und $L_D$ wird am Ausgang der Einheit 6 zur Ermittlung eines dem Abweichungswinkel zwischen der laufenden Stellung und der Sollstellung der Welle 2 der Synchronmaschine 1 entsprechenden Kodes ein von Null unterschiedliches Signal des 2(n+1)-stelligen Kodes $I_D$ für den Abweichungswinkel formiert, das am Eingang des Umsetzers 8 des dem Abweichungswinkel entsprechenden Kodes in eine Impulsfolgefrequenz eintrifft, an dessen Eingang gemäss dem vorgegebenen Gesetz eine Impulsfolge mit einer Frequenz, die bei der zu beschreibenden Ausführungsform durch die Grösse des 2(n+1)-stelligen Eingangskodes $L_D$ für den Abweichungswinkel bestimmt wird, erzeugt wird. Es ist zweckmässig, dass die Folgefrequenz dieser Impulse bei Verminderung des Wertes des Kodes $I_D$ für den Abweichungswinkel abnimmt und bei Nullwert des Kodes $I_D$ für den Abweichungswinkel die Impulsformierung unterbrochen wird. Bei der betrachteten Ausführungsform des digitalen Folgesystems wird beispielsweise folgende Abhängigkeit der Impulsfolgefrequenz $f_1$ von dem Wert des dem Abweichungswinkel entsprechenden Kodes $I_D$

$$f_1 = \frac{f_1}{K_1} \, I_D \qquad\qquad (1)$$

benutzt. Hierin bedeuten:

$K_1$ einen Umsetzungsfaktor, der von den konkreten Parametern des digitalen Folgesystems, darunter von der Konstruktion der Synchronmaschine 1, dem verwendeten Typ des Stellungsgebers 3, der schaltungsgemässen Lösung der Einheit 6 zur Ermittlung des dem Abweichungswinkel entsprechenden Kodes und des Formers 18 längenmodulierter Impulsfolgen abhängt;

$f_1$ eine Sollfrequenz des Umsetzers 8 des dem Abweichungswinkel entsprechenden Kodes.

Die Einheit 9 zur Erzeugung eines dem Modul des Abweichungswinkels entsprechenden Kodes wandelt den an seinem Eingang von dem Ausgang der Einheit 6 zur Ermittlung des der Abweichung entsprechenden Kodes eintreffenden 2(n+1)-stelligen Kode $I_D$ in ein dem Modul des Abweichungswinkels entsprechenden n-stelligen Ausgangskode $|I_D|$. Nach dem Wert des dem Modul des Abweichungswinkels entsprechenden Kodes $|I_D|$ ermittelt die Einheit zur Erzeugung eines der Amplitude des Ständermagnetfeldes entsprechenden Kodes im allgemeinen Fall den der Steuereinwirkung entsprechenden n-stelligen Kode G, der unmittelbar den Wert der Amplitude des Ständermagnetfeldes $|\overline{\Phi}_s|$ bestimmt.

Zum besseren Verständnis des Wesens der Erfindung sollen nachstehend Betriebsarten des beschriebenen digitalen Folgesystems betrachtet werden.

Die eine Betriebsart - kontinuierliche Betriebsart - wird dadurch gekennzeichnet, dass mit Signalen, die an den Steuereingängen 6, 11 eintreffen, der Multiplexer 12 den Impulseingang des Formers 18 längenmodulierter Impulsfolgen zu dem Ausgang 15 des Stellungsgebers 3 durchschaltet. Hierbei gibt der Stellungsgeber die Orientierung der Magnetfelder $\overline{\Phi}_r$, $\overline{\Phi}_s$ des Laufers und des Ständers der Synchronmaschine 1 derart vor, dass der Winkel zwischen den Magnetfeldern $\overline{\Phi}_r$, $\overline{\Phi}_s$ des Läufers und des Ständers konstant ist (oder sich im Bereich ändert, der durch das Vorhandensein einer elektromagnetischen Zeitkonstante bei der Synchronmaschine 1 bedingt ist. Bei der betrachteten Ausführungsform des digitalen Folgesystems ist dieser Winkel konstant, während es zur Erhöhung des Wirkungsgrades und der Wirkungsgeschwindigkeit des digitalen Folgesystems zweckmässig ist, diesen gleich .90° vorzugeben, was der maximalen Wechselwirkung zwischen den Magnetfeldern $\overline{\Phi}_r$, $\overline{\Phi}_s$ des Läufers und des Ständers der Synchronmaschine 1 entspricht.

Somit hat bei dem kontinuierlichen Betrieb des digitalen Folgesystems, der bei der betrachteten Ausführungsform bei Werten des laufenden n-stelligen Kodes $I_D$ für den Modul des Abweichungswinkels, welche den Wert des vorgegebenen n-stelligen Kodes $|I_Z|$ für den Modul des Abweichungswinkels übersteigt, die Winkellage des Ständermagnetfeldes $\overline{\Phi}_s$ eine direkte Abhängigkeit von der Winkellage des Läufersmagnetfeldes $\overline{\Phi}_r$, die mittels des Stellungsgebers 3 realisiert wird. Die Amplitude des Ständermagnetfeldes $\overline{\Phi}_s$ ist entweder konstant (zweckmässigerweise ist deren Maximalwert vorzugeben) oder veränderlich und wird bei der betrachteten Ausführungsform durch die Grösse des Kodes G für die Steuereinwirkung bestimmt, der direkt proportional dem Wert des Kodes $I_D$ für den Modul des Abweichungswinkels in dem digitalen Folgesystem ist.

Als andere Betriebsart kommt der Schrittbetrieb in Betracht, der dadurch gekennzeichnet wird, dass auf .an den Steuereingängen 16 und 11 eintreffende Signale der Multiplexer 12 den Impulseingang 19 des Formers 18 längenmodulierter Impulsfolgen zu dem Ausgang des Umsetzers 8 des des Abweichungswinkel entsprechenden Kodes durchschaltet. Hierbei hat die Lage des Ständermagnetfeldes $\overline{\Phi}_s$ keine direkte Abhängigkeit von der Lage des Läufermagnetfeldes $\overline{\Phi}_r$ und wird durch die mögliche sprungartige Änderung dessen Orientierung beim Übergang zum Schrittbetrieb sowie durch die Anzahl von Impulsen, die vom Umsetzer 8 des dem Abweichungswinkel entsprechenden Kodes eintreffen, bestimmt.

Der Wert der Amplitude des Ständermagnetfeldes $\overline{\Phi}_s$ wird durch den Wert des der Steuereinwirkung entsprechenden Kodes G vorgegeben, der im Schrittbetrieb des digitalen Folgesystems auch durch die Einheit 10 zur Formierung der Amplitude des Ständermagnetfeldes bestimmt wird. Hierbei kann sich der einer Steuereinwirkung entsprechende Kode G in Abhängigkeit von dem Wert der verschiedenen Signale des digitalen Folgesystems ändern oder er kann konstant bleiben (zweckmässigerweise ist sein maximaler Wert einzustellen).

Somit findet in dem Schrittbetrieb des dititalen Folgesystems, der bei der beschriebenen Ausführungsform bei Werten des dem Abweichungswinkel entsprechenden Kodes $I_D$, die kleiner als der Wert des vorgegebenen Kodes $I_Z$ des Abweichungswinkels sind, realisiert wird, eine endgültige Ausregelung des dem Abweichungseinkel entsprechenden Kodes $I_D$ durch die elektromagnetische Zusammenwirkung der Ständer- und Läufermagnetfeldes $\overline{\Phi}_s$ bzw. $\overline{\Phi}_r$ statt, deren Orientierungen in keiner direkten Abhängigkeit stehen. Die Änderung der Orientierung des Ständermagnetfeldes $\overline{\Phi}_s$ wird aus der Beziehung (1), die durch den Umsetzer 8 des der Winkelabweichung entsprechenden Kodes realisiert wird, bestimmt.

Die Trägheit der Welle 2 der Synchronmaschine 1 führt dazu, dass während des Übergangsvorganges das Läufermagnetfeld $\overline{\Phi}_r$ dem Ständermagnetfeld $\overline{\Phi}_s$ voreilt, wodurch Bremsmomente erzeugt werden, die die Ausregelung eines dem Abweichungswinkel entsprechenden entstehenden Kodes $I_D$ ohne Überregelung sichern. Die Abstellung des Ständermagnetfeldes $\overline{\Phi}_s$ sichert im Positionierpunkt eine elektromagnetische Fixierung der Welle 2 der Synchronmaschine 1 durch das entwickelte Synchronisiermoment $M_s$ für welches man schreiben kann

$$M_s = K_2 \, \bar{\varphi}_r \, \bar{\varphi}_s \, \sin ( \, \bar{\varphi}_r \wedge \bar{\varphi}_s) \qquad (2)$$

worin $K_2$ ein Koeffizient ist, der durch die Abmessungen und die Konstruktion der Synchronmaschine 1, insbesondere durch die Form des Läufers und des Ständers und die Grösse des Luftspaltes zwischen diesen bestimmt wird. Beim Anliegen eines Belastungsmomentes $M_n$ an der Welle 2 der Synchronmaschine wird die Orientierung des Läufermagnetfeldes $\bar{\varphi}_r$ gegenüber der fixierten Lage des Ständermagnetfeldes $\bar{\varphi}_s$ um einen Winkel $\alpha_n$ geändert, der aus dem Verhältnis:

$$\alpha_n = \text{arc} \, \sin \frac{M_n}{K_2 \, \varphi_r \, \varphi_s} \qquad (3)$$

bestimmt wird, was die Zuführung eines von Null unterschiedlichen Kodes $I_D$ an den Umsetzer 8 , die Erzeugung von Impulsen mit einer Frequenz $f_i$, die aus dem Verhältnis (1) bestimmt wird, bewirkt und zu einer Verschiebung des Ständermagnetfeldes $\bar{\varphi}_s$ so lange führt, bis der Läufer eine Stellung einnimmt, die durch den der Sollstellung der Welle 2 der Synchronmaschine 1 entsprechenden Kode $L_Z$ bestimmt wird. Dies entspricht dem Nullwert des dem Abweichungswinkel zwischen der laufenden Stellung und der Sollstellung der Welle 2 der Synchronmaschine 1 entsprechenden Kodes $I_D$. Somit gewährleistet das beschriebene digitale Folgesystem bei einem zeilgerichteten Übergang vom kontinuierlichen Betrieb zum Schrittbetrieb bei der Ausregelung von in dem System entstehender Abweichungen im stationären Zustand die erforderliche Positioniergenauigkeit bei Variierung des Belastungsmomentes $M_n$ im gesamten Änderungsbereich desselben.

Die Grösse des dem Abweichungswinkel entsprechenden Kodes $I_Z$, der bei dem beschriebenen digitalen Folgesystem den Zeitpunkt der Änderung dessen Betriebsart bestimmt, wird im allgemeinen Fall bei den schlechtesten Arbeitsbedingungen des digitalen Folgesystems, insbesondere unter Berücksichtigung des höchstzulässigen, der Stellung der Welle 2 entsprechenden Kodes $L_Z$ und des maximalen Belastungsmomentes $M_n$ bestimmt.

Der Former 18 längenmodulierter Impulsfolgen setzt bei beliebiger Betriebsart des digitalen Folgesystems die an seinem Impulseingang 19 eintreffenden Signale in ein System von mehreren (nach der Phasenzahl der Synchronmaschine 1) längenmodulierten Impulsfolgen und deren Polaritäten um. Das Modulationsgesetz wird zweckmässigerweise in Abhängigkeit von der Verteilung der Magnetinduktion in dem Arbeitsspalt der Synchronmaschine 1 unter Berücksichtigung der Unsymmetrie der Ausführung des Läufers und der Ständerwicklungen bestimmt. Bei dem beschriebenen digitalen Folgesystem für eine dreiphasige Synchronmaschine 1 ist ein Sinusoidalgesetz für die Erzeugung längenmodulierter Impulsfolgen angenommen, deren erste Harmonischen zueinander um 120 el. Grad versetzt sind, wobei die Modulationstiefe der erwähnten Impulsfolgen durch den n-stelligen Steuereinwirkungskode G, der an dem Dateneingang 17 des Formers 18 eintrifft, bestimmt wird. Hierbei ist die Dauer der mit einer konstanten Frequenz folgenden Impulse direkt proportional dem Wert des Steuereinwirkungskodes G, während der minimale Winkel zwischen zwei fixierten Lagen des auf diese Weise geformten Ständermagnetfeldes $\overline{\Phi}_s$ der Synchronmaschine 1 durch das maximale Auflösungsvermögen des Stellungsgebers 3 bestimmt wird.

Die Reversiereinheit 21 wandelt in Abhängigkeit von dem Vorteichen des dem Abweichungswinkel entsprechenden Kodes $I_D$, der an ihrem Steuereingang eintrifft, den der Signalpolarität entsprechenden Kode um, der am Eingang 20 eintrifft. Hierbei formiert die Einheit 23 am Ausgang diesem Kode entsprechende Polungen der längenmodulierten Impulsfolgen, die an ihrem Eingang 22 eintreffen. Infolge der Zusammenwirkung des durch die Ströme der Ständerwicklungen geformten Ständermagnetfeldes $\overline{\Phi}_s$ mit dem Läufermagnetfeld $\overline{\Phi}_r$ findet eine Verminderung der Abweichung in dem digitalen Folgesystem statt.

Bei der oben beschriebenen Ausführung der Einheit 6 zur Ermittlung des dem Abweichungseinle zwischen der laufenden Stellung und der Sollstellung der Welle entsprechenden Kodes wird auf der Grundlage der Arithmetik-Logik-Einheiten 49, 50 (Fig. 2) ein 2(n+1)-stelliger, dem Abweichungswinkel entsprechender Ausgangskode $I_D$ folgenderweise formiert. Die Arithmetik-Logik-Einheit 49 formiert einen (n+1)-stelligen Kode, dessen n Bits den (bei $L_Z \geqslant L_D$) Direkt- und den (bei $L_Z < L_D$) Komplementkodes $I_D$ des Abweichungswinkels bestimmt, während die Arithmetik-Logik-Einheit 50 einen (n+1)-stelligen Kode formiert, dessen n Bits den (bei $L_Z \leqslant L_D$) Direkt- und den (bei $L_Z > L_D$) Komplementkode $I_D$ des Abweichungswinkels in dem digitalen Folgesystem bestimmt, wobei die Signale der (n+1)-Bitstellen eine Information über das Vorzeichen des Abweichungswinkels repräsentieren.

Von dem am Wandler 8 eintreffenden, dem Abweichungswinkel entsprechenden 2(n+1)-stelligen Kodes wird bei der beschriebenen Ausführungsform nur der (n+1)stellige Kode benutzt, der als Ausgangskode für jede der Arithmetik-Logik-Einheiten 49, 50 dient, wobei die n Betstellen als Bitstellen des Adresseinganges des Festwertspeichers 24, in dem die an dem Dateneingang 25 des Zählers 27 eintreffenden Kodes eingespeichert sind, an dessen Subtraktionseingang Impulse mit einer Frequenz $f_1$ eintreffen, was zu einer Erniedrigung des Inhaltes des Zählers 27 führt. Sobald der Inhalt des Zählers 27 gleich Null, wird vom Borgausgang des Zählers 27 ein Signal auf den Schreibeingang 29 gegeben, über den von dem Dateneingang 25 in den Zähler 27 der laufende Wert des Kodes eingetragen wird, der die Impulsfolgefrequenz $f_1$, die gemäss der Beziehung (1) berechnet wird, bestimmt. Es sei bemerkt, dass bei fehlender Abweichung in digitalern Folgesystem ($I_D = 0$) der Festwertspeicher 24 auf den Rücksetzeingang 26 des Zählers 27 ein Signal gibt, mit dem die Formierung der Ausgangsfrequenz $f_i$ abgebrochen wird, so dass eine Fixierung der Welle 2 der Synchronmaschine 1 im Schrittbetrieb des digitalen Folgesystems gewährleistet wird. Die Berücksichtigung der erforderlichen Verschiebungsrichtung des Ständermagnetfeldes $\vec{J}_s$

im Sinne der Veminderung des Abweichungswinkels erfolgt durch die (n+1)-te Bitstelle des Eingangskodes des Umsetzers 8 mittels des Negators 35 des Schalters 34, was das Auftreten von Impulsen mit einer Folgefrequenz $f_i$ am Ausgang eines der logischen 2-Eingangs-UND-Glieder 36, 37 bewirkt.

Die Einheit 9 zur Formierung eines dem Modul des Abweichungswinkels entsprechenden Kodes wählt aufgrund einer der (n+1)-ten Bitstellen der Ausgangskodes der Arithmetik-Logik-Einheiten 49, 50 aus den zwei n-stelligen Kodes einen solchen Abweichungswinkel- Kode $I_D$, der zu diesem Zeitpunkt im Direktkode dargestellt ist, wobei am Ausgang der Einheit 9 ein dem Modul des Abweichungswinkels entsprechender n-stellige Kode $|I_D|$ formiert.

Die Einheit 10 zur Formierung eines der Amplitude des Ständermagnetfeldes entsprechenden Kodes vergleicht am Schwellenwertelement 51 den laufenden n-stelligen Kode $|.I_D|$ und den vom Sollwertgeber 52 vorgegebenen n-stelligen, dem Modul des Abweichungswinkels zugeordneten Kode $|I_Z|$, hierbei wird am Ausgang des Schwellenwertelementes 51 ein Signal formiert, das die Betriebsart des digitalen Folgesystems bestimmt.

Im kontinuierlichen Betrieb des digitalen Folgesystems, bei dem die Bedingung $|I_D| > |I_Z|$ gelten muss und der durch grosse Werte des dem Abweichungswinkel entsprechenden Kodes $I_D$ gekennzeichnet wird (Fig. 4, Kurve a, Zeitintervall $t_o-t_2$), erscheint am Ausgang des Schwellenwertelementes 51 ein logisches 0-Signal, wobei an den Ausgängen der logischen 2-Eingangs-UND-Glieder 42, 43 der Multiplikationseinheit 40 auch logische 0-Signale eingestellt werden. Dabei vergleicht das Schwellenwertelement 38 des Multiplexers 12 den dem Modul des Abweichungswinkels entsprechenden Kode $|I_D|$ mit einem solchen von dem Sollwertgeber 39 eingestellten Kode, bei dem am Ausgang des Schwellenwertelementes 38 im kontinuierlichen Betrieb des digitalen Folgesystems ein logisches 1-Signal erscheint. Dies führt zu einem Anschluss

der Impulsausgänge $15_1$, $15_2$ des Stellungsgebers 3 über die logischen ODER-Glieder 46, 47 des Addierers 48 an die Impulseingänge $19_1$, $19_2$ des Formers 18 längenmodullierter Impulsfolgen. Der Former 15 für die Adresse des Lage des Ständermagnetfeldes formiert mit an dem Additions- oder dem Subtraktionseingang anliegenden Signalen (je nach Drehrichtung der Welle 2 der Synchronmaschine) am Ausgang einen Kode, der an dem Adresseingang des Festwertspeichers 56 mit den in diesem abgelegten Kodes, die die Dauer und Polarität des Anschlusses sämtlicher (bei der beschriebenen Ausführungsform dreier) Ständerwicklungen 81 der Synchronmaschine 1 an die Speisequelle 73 bestimmen, eintrifft. Diese Kodes sichern eine Orientierung des Ständermagnetfeldes $_s$ senkrecht zur Richtung des Läufermagnetfeldes $_r$ (Fig. 5, a, b, c, d) im Laufe des gesamten kontinuierlichen Betriebes des digitalen Folgesystems. Die Dauerkodes werden aus dem Festwertspeicher 56 in die Zähler 61 der Pulslängenmodulatoren 58 über die Dateneingänge 67 eingetragen. Die Eintragungsfrequenz dieser Kodes ist konstant, während die Eintragung auf Impulse vom Ausgang des Frequenzteilers 64 erfolgt, der die Teilung der Frequenz $f_2$ des Impulsgenerators 65 bewirkt, dessen Impulse an den Schreibeingängen 70 der Zähler 66 der Pulslängenmodulatoren 58 eintreffen. Nach dem Einschreiben der von Null unterschiedlichen Kodes erscheinen an den Borgausgängen der Zähler 66 logische 1-Signale, die den Beginn der Impulse zum Anschluss der Ständerwicklungen 81 der Synchronmaschine 1 an die Speisequelle 73 festlegen. Hierbei erscheinen logische 1-Signale auch an einem der Eingänge der logischen 2-Eingangs-UND-Glieder 68, wodurch der Durchgang der Impulse von dem Borgausgang 61 des steuerbaren Frequenzteilers 54 über die logische 2-Eingangs-UND-Glieder 68 zu den Subtraktionseingängen 69 der Zähler 66 freigegeben wird. Die Folgeperiode dieser Impulse ist gleich der Folgeperiode der Impulse vom Generator 65, vermindert um den der Steuereinwirkung entsprechenden Kode G, der bei Nullwert des Signals an einem Eingang des Summators 53, der als Eingang der

EP 0 370 105 A1

Einheit 10 dient, gleich einem dem Modul des Abweichungswinkel entsprechenden Kode $|I_D|$ ist und am Dateneingang 67 des Zählers 66 eintrifft. Somit ist unter Berücksichtigung des oben beschriebenen dem der Steuerwirkung entsprechenden Kode G auch die Dauer der Impulse an den Borgausgängen der Zähler 66, deren Folge bei Nullwert der Zahlen in den Zählern 66 beendet wird, proportional. Hierbei erscheint an den Borgausgängen ein logisches Nullsignal und das Eintreffen der Impulse vom Borgausgang des Zählers 61 an den Subtraktionseingängen 69 der Zähler 66 über die logische 2-Eingangs-UND-Glieder 68 wird unterbrochen.

Der Kode der Polarität der Impulse, die an den Eingängen $20_1$, $20_2$, $20_3$ der Reversiereinheit 21 auf ein Signal an der (n+1)ten Bitstelle der Arithmetik-Logik-Einheiten 49, 50 eintreffen, wird invertiert oder passiert ohne Änderungen die logischen Exklussiv-ODER-Glieder 71 mit zwei Eingängen, was im kontinuierlichen Betrieb eine Ausregelung der Abweichungen mit verschiedenen Vorzeichen sichert. In jedem Falle werden in Abhängigkeit von dem Polaritätskode, der von den Ausgängen der Reversiereinheit 21 an den Eingängen der Schalter 72 eintrifft, die Ständerwicklungen 81 der Synchronmaschine 1 für die Dauer des vom Borgausgang der Zähler 66 eintreffenden Impulses an diesen oder jenen Pol der Speisequelle 73 mit Hilfe der Schalter 77, 78, 79, 80 angeschlossen, die jeweils durch die logischen 2-Eingangs-UND-Glieder 75, 76 gesteuert werden. Hierbei wird in der Pause zwischen zwei Impulsen eine dynamische Bremsung der Synchronmaschine 1 durch Anlegen der Enden jeder Wicklung 81 über die Schalter 77, 79 und 78, 80 gleicher Leitfähigkeit an einen der Pole der Speisequelle 73 bewirkt. Infolge der erwähnten Schaltungen der galvanisch entkoppelten Ständerwicklungen 81 wird eine Proportionalität der Amplitude des Ständermagnetfeldes $\overline{\Phi}_s$ und des der Steuereinwirkung entsprechenden Kodes G gesichert (Fig. 5, a, b, c).

Die Wechselwirkung der Magnetfelder $\overline{\Phi}_s$, $\overline{\Phi}_r$ des Ständers und des Läufers führt zu einer Drehung der Welle 2 der Synchronmaschine 1 im Sinne einer Verminderung der Abweichung in dem digitalen Folgesystem. Hierbei erzeugt der Wandler 82 der Winkelverstellungen des Stellungsgebers 3 bei der beschriebenen Ausführungsform zwei gegeneinander um eine Vierteldauerperiode versetzte Impulsfolgen. Dies gestattet es, bei der Zuführung einer der Impulsfolgen, beispielsweise an den Takteingang 83, und der anderen Impulsfolge an den Dateneingang 84 des Flipflops 85 am nicht invertierendenAusgang des Flipflops 85 ein logisches 1-Signal bei der einen Drehrichtung und ein logisches 0-Signal bei der anderen Drehrichtung der Welle 2 der Synchronmaschine 1 zu erhalten. Dadurch ist es möglich, unter Benutzung der logischen 2-Eingangs-UND-Glieder 86, 87 sowie des nichtinvertierenden und des invertierenden Ausgangs des Flipflops 85 eine der Impulsfolgen, die beispielsweise am Takteingang 83 des Flipflops 85 eintrifft, auf den nichtinvertierenden Eingang 88 oder auf den Reversiereingang 89 des Zählers 90 so zu geben, dass die Änderung des von diesem formierten n-stelligen, der laufenden Stellung der Welle 2 entsprechenden Kodes $L_D$ an dem Kodeausgang 4 des Stellungsgebers 3 im Sinne einer Verminderung der Abweichung in dem digitalen Folgesystem stattfindet.

Bei Änderung der Signale an den Ausgängen der Schwellenwertelemente 38, 51 geht das digitale Folgesystem zum Schrittbetrieb (Fig. 4, Kurve a, Zeitintervall $t_2-t_4$) über. Hierbei erscheint an dem einen Eingang des Summators 53, der als Eingang der Einheit 10 dient, ein logisches 1-Signal, und in dem Summator 53 findet eine logische Addition desselben mit dem Kode an seinem anderen Eingang statt, wodurch am Dateneingang des Zählers 61 der maximale Wert des der Steuereinwirkung entsprechenden Kodes G eintrifft, während die Amplitude des Ständermagnetfeldes $\overline{\Phi}_s$ einen höchstmöglichen Wert aufweist. Hierbei verbietet das Signal vom Ausgang des Schwellenwertelementes 38 den Durchgang der Signale durch die Multiplikationseinheit 41, während auf ein Signal vom Ausgang des Schwellenwertelementes 51 die Ausgänge der logischen 2-Eingangs-UND-Glieder 36, 37 des Schalters 34 über die

Multiplikationseinheit 40 und den Addierer 48 jeweils an den Additions- und Subtraktionseingang des Formers 55 für die Adresse der Lage des Ständermagnetfeldes gelegt werden. Bei der beschriebenen Ausführungsform des digitalen Folgesystems führt dies dazu, dass die Verstellungsgeschwindigkeit des Läufer- und des Ständermagnetfeldes $\overline{\dot{\Phi}}_r$, $\overline{\dot{\Phi}}_s$ infolge der niedrigen Folgefrequenz $f_i$ der Impulse, die von dem Umsetzer 8 des der Abweichung entsprechenden Kodes formiert werden, im Vergleich zu der Folgefrequenz der Impulse von den Impulsausgängen $15_1$, $15_2$ des Stellungsgebers 3 bei Änderung der Betriebsart des digitalen Folgesystems unterschiedlich werden. Hierbei eilt das Läufermagnetfeld $\overline{\dot{\Phi}}_r$ dem Ständermagnetfeld $\overline{\dot{\Phi}}_s$ vor und es entsteht ein Bremsmoment. Ab dem Zeitpunkt $t_2$ vollführt das Läufermagnetfeld abklingende Schwingungen gemäss Fig. 5(e), wo mit einer ausgezogenen und einer punktierten Linie der Änderungsbereich der Lage des Läufermagnetfeldes $\overline{\dot{\Phi}}_r$ gegenüber dem Ständermagnetfeld $\overline{\dot{\Phi}}_s$ gezeigt ist, was jedoch keine Überregelung in dem digitalen Folgesystem hervorruft, da die Amplitude dieser Schwingungen im ungünstigsten Falle die halbe Periode des Synchronisiermomentes $M_s$, das aus dem Ausdruck (2) unter Berücksichtigung der Zahl der Polpaare des Läufers ermittelt wird, nicht übersteigt. Der Übergang des digitalen Folgesystems zum Schrittbetrieb erfolgt in einem Punkt, der von dem Positionierpunkt, welcher durch den vorgegebenen, dem Abweichungswinkel entsprechenden Kode $L_Z$ bestimmt wird, um den vorgegebenen, dem Modul des Abweichungswinkels entsprechenden Kode $|I_D|$ entfernt ist, dessen Wahl vorbeschrieben und in Fig.4 dargestellt ist. Im beliebigen Falle sichert der vorgegebene Kode $|I_Z|$ eine Verminderung der Amplitude der Schwingungen des Läufermagnetfeldes $\overline{\dot{\Phi}}_r$ gegenüber dem Ständermagnetfeldes $\overline{\dot{\Phi}}_s$ bis auf Werte, die den Genauigkeitsforderungen an das digitale Folgesystem entsprechen, oder eine vollständige Einstellung dieser Schwingungen im Positionierpunkt durch die entstehenden Bremsmomente (Fig. 4, Kurve a, Zeitintervall $t_2$-$t_4$). Das Anliegen eines Belas-

tungsmomentes $M_n$ an der Welle 2 der Synchronmaschine 1 führt zu einer gegenseitigen Lage des Läufer- und des Ständermagnetfeldes $\overline{\Phi}_r$ bzw. $\overline{\Phi}_s$, die in Fig. 5 (f) dargestellt ist, hierbei wird der Winkel $\alpha_n$ aus der Beziehung (3) ermittelt.

Bei der anderen Ausführungsform des digitalen Folgesystems nach Fig. 3 finktionieren die Einheit 6 zur Ermittlung des dem Abweichungswinkels zwischen der laufenden und der vorgegebenen Stellung der Welle, entsprechenden Kodes, der Umsetzer 8 des dem Abweichungswinkels entsprechenden Kodes in eine Impulsfolgefrequenz, der Multiplexer 12, die Einheit 10 zur Erzeugung eines dem Modul des Abweichungswinkels entsprechenden Kodes, der Former 55 für die Adresse der Lage des Ständermagnetfeldes und die zum Former 18 längenmodulierter Impulsfolgen gehörenden Pulslängenmodulatoren 58 sowie die Reversiereinheit 21, die Einheit 23 zur Formierung eines Stromes in den Ständerwicklungen der Mehrphasen-Synchronmaschine und der Stellungsgeber 3 auf vorstehend beschriebene Art und Weise. Hierbei erzeugt der Generator 97 unabhängig von der Betriebsart des digitalen Folgesystems Impulse, die mit einer Frequenz $f_3$ folgen und die an den Steuereingängen 60 der Pulslängenmodulatoren 58 eintreffen. Dabei wird durch die Frequenz, mit der über die Dateneingänge 57 die an den Steuereingängen 59 vom Frequenzteiler 96 eintreffenden Kodes der Dauer eingetragen werden, die Formierung von Dauern der Impulse an den Ausgängen der Pulslängenmodulatoren gesichert, welche dem maximalen Wert der Amplitude des Ständermagnetfeldes $\overline{\Phi}_s$ gemäss Fig. 6 (a, b, c, d, e) im Verlaufe der Ausregelungszeit der Abweichung (Fig. 4, Kurve b, Zeitintervall $t_o$-$t_3$) entsprechen. Dies erhöht die Wirkungsgeschwindigkeit der beschriebenen Ausführungsform des digitalen Folgesystems im kontinuierlichen Betrieb und folglich die gesamte Wirkungsgeschwindigkeit. Es ist zu bemerken, dass im kontinuierlichen Betrieb (Fig. 4, Kurve b, Zeitintervall $t_o$-$t_1$) bis zum Punkt der Betriebsartenumschaltung, der dem Zeitpunkt $t_1$ entspricht, der Umsetzer 93 der Adresse der Lage des Ständermagnetfeldes am Ausgang den Kode, der an seinem Eingang 92 vom Ausgang des Formers 55 der Adresse der Lage des Ständermagnetfeldes eintrifft, nicht ändert. Infolgedessen wird im kontinuierlichen Betrieb zwischen dem Läufermagnetfeld $\overline{\Phi}_r$ und dem Ständermagnetfeld $\overline{\Phi}_s$ die Perpendikularität (Fig. 6, a, b) der Orientierung dieser Felder aufrechterhalten. Im Umschaltpunkt der Betriebsarten (Fig. 4, Kuve b, Zeitpunkt $t_1$) erfolgt eine sprunghafte Änderung der Lage des Ständermagnetfeldes $\overline{\Phi}_s$, welche durch Hinzufügen oder Abziehen (je nach dem Signal am Dateneingang 94 des Umsetzers 93) eines auf das am Steuereingang 95 ankommende Signal formierten entsprechenden Kodes zu bzw. von dem am Eingang 92 des Umsetzers 93 eintreffenden Kode bedingt ist. Es ist zweckmässig, eine Änderung der Lage des Ständermagnetfeldes $\overline{\Phi}_s$ in Richtung zum Läufermagnetfeld $\overline{\Phi}_r$ vorzunehmen. Bei der in Rede stehenden Ausführungsform ist der Wert des der Änderung der Lage entsprechenden Kodes derart gewählt, dass in dem Umschaltpunkt der Betriebsarten des digitalen Folgesystems eine räumliche Übereinstimmung des Läufer- und des Ständermagnetfeldes $\overline{\Phi}_r$ bzw. $\overline{\Phi}_s$ stattfindet, wie dies in Fig. 6 (c) gezeigt ist. Hierbei beginnt das digitale Folgesystem im Schrittbetrieb analog zu arbeiten, wie dies für die in Fig. 2 dargestellte Ausführungsform beschrieben ist. Es sei angemerkt, dass bei der betrachteten Ausführungsform die Bremsung des Läufers der Synchronmaschine 1 ab dem Zeitpunkt $t_1$ (Fig. 6, c, d) beginnt, was eine wirksame Verminderung der kinetischen Energie des Laufers, eine Verkürzung der Dauer der Schwingungen des Läufermagnetfeldes $\overline{\Phi}_r$ gegenüber dem Ständermagnetfeld $\overline{\Phi}$ (Fig. 4, Kurve b, Zeitintervall $t_1-t_3$) sichert und folglich zu einer Verminderung der Abweichungsgrösse, die durch das digitale Folgesystems im Schrittbetrieb ausgeregelt wird, und zu einer Steigerung der gesamten Wirkungsgeschwindigkeit führt.

Jedoch ist es bei weniger harten Forderungen an die Wirkungsgeschwindigkeit der digitalen Folgesysteme zweckmässiger, die Ausführungsform des digitalen Folgesystems gemäss der Fig. 2 zu benutzen. In diesem Falle findet ein sprungloser Übergang vom kontinuierlichen Betrieb zum Schrittbetrieb statt, was es gestattet, eventuelle Schlageinwirkungen auf den Läufer der Synchronmaschine 1, die mit einer sprungartigen Änderung der Lage des Ständermagnetfeldes $\overline{\Phi}_s$ verbunden sind, zu vermeiden, wobei die Schwingungen des Läufermagnetfeldes $\overline{\Phi}_r$ in bezug auf das Ständermagnetfeld $\overline{\Phi}_s$ weniger ausgeprägt sind (Fig. 5, e und Fig. 6, d). Hierbei ist durch Änderung der Amplitude des Ständermagnetfeldes $\overline{\Phi}_s$ in Abhängigkeit von der Abweichung im kontinuierlichen Betrieb des digitalen Folgesystems die Ausführungsform gemäss Fig. 2 der anderen Ausführungsform an energetischen Kennziffern überlegen.

Zum Vergleich der Ausführungsformen des digitalen Folgesystems (Fig. 2, 3) sind die Übergangsvorgänge in Fig. 4 (Kurven a, b) für einen Wert des dem Modul des Abweichungswinkels entsprechenden vorgegebenen Kodes $|I_Z|$ angeführt.

Die Forderung an die Güte der Übergangsvorgänge in der Ausführungsform des digitalen Folgesystems gemäss Fig. 3 bestimmt den dem Modull des Abweichungswinkels entsprechenden vorgegebenen Kode $|I_Z|$, der von dem Sollwertgeber 52 an einem Eingang des Schwellenwertelementes 51 und dem Sollwertgeber 39 (Fig. 2) an einem Eingang des Schwellenwertelementes 38 formiert wird, sowie den Koeffizienten $K_1$ des Umsetzers 8 des dem Abweichungswinkel entsprechenden Kodes. Die Arbeitsweise der angegebenen Ausführungsform im Betriebszustand der elektromagnetischen Fixierung der Welle der Synchronmaschine 1 und bei Änderung des Belastungsmomentes $M_n$ im stationären Betrieb ist der Wirkungsweise der oben beschriebenen Ausführungsform des digitalen Folgesystems (Fig. 5, f und Fig. 6, c) analog.

Somit wird durch Änderung der Betriebsart des digitalen Folgesystems nach einem vorgegebenen Programm, das in einem kontinuierlichen Betrieb bei grossen Abweichungswinkeln besteht, welcher durch eine hohe Wirkungsgeschwindigkeit und einen hohen Wirkungsgrad gekennzeichnet ist, und in einem Schrittbetrieb bei geringen Abweichungswinkeln, welcher durch eine genaue Positionierung im gesamten Änderungsbereich des Belastungsmomentes und eine elektromagnetische Fixierung der Welle der Synchronmaschine 1 gekennzeichnet ist, die erforderliche Güte der Übergangsvorgänge gesichert. Das Fehlen einer Überregelung führt zu einer Erweiterung des Anwendungsgebietes des digitalen Folgesystems und zu einer erhöhten Güte der von dem Positioniereinrichtungen auszuführenden Operationen.

Gewerbliche Anwendbarkeit

Die vorliegende Erfindung kann in Positioniereinrichtungen mit Synchronmaschinen, insbesondere in der Robotertechnik und in NC-Werkzeugmaschinen benutzt werden.

PATENTANSPRÜCHE

1. Digitales Folgesystem, das eine Mehrphasen-
Synchronmaschine (1) enthält, an deren Welle (2) ein
Stellungsgeber (3) angebracht ist, dessen Kodeausgang (4) an den einen Eingang (5) einer Einheit (6) zur
Ermittlung des dem Abweichungswinkel zwischen der laufenden Stellung und der Sollstellung der Welle entsprechenden Kodes gelegt ist, auf deren anderen Eingang (7)
ein der Sollstellung der Welle entsprechender Kode gegeben wird und an deren Ausgang eine Einheit (9) zur Erzeugung eines dem Modul des Abweichungswinkels entsprechenden Kodes geschaltet ist, die mit einem Former (18)
längenmodulierter Impulsfolgen elektrisch verbunden ist,
der mit dem Impulsausgang (5) des Stellungsgebers (3)
in elektrischer Verbindung steht und über seinen einen
Ausgang an den einen Eingang (20) einer Reversiereinheit (21), deren Steuereingang an den Ausgang der Einheit (6) zur Ermittlung des dem Abweichungswinkel zwischen der laufenden Stellung und der Sollstellung der
Welle entsprechenden Kodes gelegt ist, und über seinen
anderen Ausgang an den einen Eingang (22) einer Einheit (23)
zur Formierung des Stromes in den Ständerwicklungen der
Mehrphasen-Synchronmaschine angeschlossen ist, deren
anderer Eingang an den Ausgang der Reversiereinheit (21)
und deren Ausgang an die Ständerwicklungen (81) der Mehrphasen-Synchronmaschine 1 angeschlossen sind, dadurch
g e k e n n z e i c h n e t,  dass es einen Umsetzer (8)
des dem Abweichungswinkel entsprechenden Kodes in eine
Impulsfolgefrequenz, dessen Eingang an den Ausgang der
Einheit (6) zur Ermittlung des dem Abweichungswinkel
zwischen der laufenden Stellung und der Sollstellung entsprechenden Kodes gelegt ist, einen Multiplexer (12),
der über seine Dateneingänge (13, 14) an den Ausgang des
Umsetzers (8) des dem Abweichungswinkel entsprechenden
Kodes in eine Impulsfolgefrequenz und an den Impulsausgang
(15) des Stellungsgebers (3) und über den einen Steuereingang (11) an den Ausgang der Einheit (9) zur Erzeugung eines dem Modul des Abweichungswinkels entsprechenden

EP 0 370 105 A1

Kodes gelegt ist, wobei der Multiplexer ausgangsseitig an den Impulseingang (19) des Formers (18) längenmodulierter Impulsfolgen angeschlossen ist, und eine Einheit (10) zue Erzeugung eines der Amplitude des Ständermagnetfeldes entsprechenden Kodes geschaltet ist, die eingangsseitig an den Ausgang der Einheit (9) zur Erzeugung eines dem Modul des Abweichungswinkel entsprechenden Kodes und ausgangsseitig an den anderen Steuereingang (16) des Multiplexers (12) und den Dateneingang (17) des Formers (18) längenmodulierter Impulsfolgen angeschlossen ist, enthält.

2. Digitales Folgesystem nach Anspruch 1, dadurch g e k e n n z e i c h n e t, dass der Umsetzer (8) des dem Abweichungswinkel entsprechenden Kodes in eine Impulsfolgefrequenz einen Festwertspeicher (24), einen eingangseitig an die Ausgänge des Festwertspeichers (24) angeschlossenen steuerbaren Frequenzteiler (28) und einen Umschalter (34), dessen einer Eingang (32) an den Ausgang des steuerbaren Frequenzteilers (28) angeschlossen und dessen anderer Eingang (33) mit dem Eingang des Festwertspeichers (24) zusammengeschaltet ist, enthält.

3. Digitales Folgesystem nach Ansprüchen 1 und 2, dadurch g e k e n n z e i c h n e t, dass der Multiplexer (12) ein Schwellenwertelement (38), zwei Multiplikationseinheiten (40, 41), bei einer von denen der eine Eingang an den Ausgang eines Schwellenwertelementes (38) angeschlossen ist, und einen Addierer (48), dessen Eingänge an die Ausgänge der Multiplikationseinheiten (40, 41) gelegt sind, enthält.

4. Digitales Folgesystem nach Ansprüchen 1 und 2, dadurch g e k e n n z e i c h n e t, dass die Einheit (10) zur Erzeugung eines der Amplitude des Ständermagnetfeldes entsprechenden Kodes ein Schwellenwertelement (51) und einen Summator (53), dessen einer Eingang mit dem Eingang des Schwellenwertelementes (51) zusammengeschaltet ist, und dessen anderer Eingang am Ausgang des letzteren liegt, enthält.

5. Digitales Folgesystem nach Ansprüchen 1, und 2, dadurch g e k e n n z e i c h n e t, dass die Einheit (10) zur Erzeugung eines der Amplitude des Ständermagnetfeldes auf der Grundlage des Schwellenwertelementes (51) ausgeführt ist und dass der Former (18) längenmodulierter Impulsfolgen - in Reihe geschaltet - einen Former (55) für die Adresse der Lage des Ständermagnetfeldes, einen Umsetzer für die Adresse der Lage des Ständermagnetfeldes und einen Festwertspeicher (56), eine der Phasenzahl der Mehrphasen-Synchronmaschine (1) entsprechende Zahl von Pulslängenmodulatoren (58), deren Dateneingänge (57) an die Kodeausgänge des Festwertspeichers (56) angeschlossen sind, einen an die einen Steuereingänge (60) der Pulslängenmodulatoren (58) angeschlossenen Impulsgenerator (97), und einen Frequenzteiler (96), der eingangsseitig an einen Impulsgenerator (97) und ausgangsseitig an die anderen Steuereingänge (59) der Pulslängenmodulatoren (58) angeschlossen ist, enthält, wobei der Stellungsgeber (3) mit einem Datenausgang (91) versehen ist, der an den Dateneingang (94) eines Umsetzers (93) für die Adresse der Lage des Ständermagnetfeldes angeschlossen ist.

6. Digitales Folgesystem nach Anspruch 3, dadurch g e k e n n z e i c h n e t, dass die Einheit (10) zur Erzeugung eines der Amplitude des Ständermagnetfeldes entsprechenden Kodes einen Schwellenwertelement (51) und einen Summator (53) enthält, dessen einer Eingang mit dem Eingang des Schwellenwertelementes (51) zusammengeschaltet und dessen anderer Eingang an seinen Ausgang angeschlossen ist.

7. Digitales Folgesystem nach Anspruch 3, dadurch g e k e n n z e i c h e n t, dass die Einheit (10) zur Erzeugung eines der Amplitude des Ständermagnetfeldes entsprechenden Kodes auf der Grundlage des Schwellenwertelementes (51) ausgeführt ist,und dass der Former (18) längenmodulierter Impulsfolgen - in Reihe geschaltet - einen Former (55) für die Adresse der Lage des Ständermagnetfeldes, einen Umsetzer (93) für die Adresse der Lage des Ständermagnetfeldes und einen Festwertspeicher (56), eine der Phasenzahl der Mehrphasen-Synchronmaschine (1) entsprechende Zahl von Pulslängenmodulatoren (58), deren Dateneingänge (57) an die Kodeausgänge des Festwertspeichers (56) gelegt sind, einen an die einen Steuereingänge (60) der Pulslängenmodulatoren (58) angeschlossenen Impulsgenerator (97) und einen Frequenzteiler (96),
der eingangsseitig an den Impulsgenerator (97) und
ausgangsseitig an die anderen Steuereingänge (59) der
Pulslängenmodulatoren (58) angeschlossen ist, wobei
der Stellungsgeber (3) mit einem an den Dateneingang (94)
des Umsetzers (93) für die Adresse der Lage des
Ständermagnetfeldes angeschlossenen Dateneingang (94)
versehen ist.

FIG.1

FIG.2

FIG. 3

FIG. 4

FIG. 5

FIG. 6

# INTERNATIONAL SEARCH REPORT

International Application No PCT/SU 88/00034

## I. CLASSIFICATION OF SUBJECT MATTER (if several classification symbols apply, indicate all) ⁶

According to International Patent Classification (IPC) or to both National Classification and IPC

IPC⁴    G05B 11/26

## II. FIELDS SEARCHED

| Minimum Documentation Searched ⁷ | |
|---|---|
| Classification System | Classification Symbols |
| IPC⁴ | G05B 5/01,11/00,11/10,11/26,11/01 <br> H02K 29/06 |

| Documentation Searched other than Minimum Documentation <br> to the Extent that such Documents are included in the Fields Searched ⁸ |
|---|
| |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| A | SU, A1, 1193634 (V.A. Balayants et al.) 23 November 1985 (23.11.85) see column 4,lines 13-20 | 1 |
| A | SU, A1, 1012193 (Dalnevostochny ordena Trudovogo Krasnogo Znameni politekhnichesky institut im V.V. Kuibysheva) 15 April 1983 (15.04.83) | 1 |
| A | SU, A1, 964882 (Dalnevostochny ordena Trudovogo Krasnogo Znameni politekhnichesky institut im V.V. Kuibysheva) 7 October 1982 (07.10.82) see column 4,lines 60-65 | 1 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 22 September 1988 (22.09.88). | 5 November 1988 (05.11.88) |
| International Searching Authority <br> ISA/SU | Signature of Authorized Officer |

Form PCT/ISA/210 (second sheet) (January 1985)